# FASCICULE DE BREVET EUROPEEN

(11) **EP 3 455 094 B1**
(45) Date de publication et mention de la délivrance du brevet: **29.04.2020**
(21) Numéro de dépôt: 17727940.3
(22) Date de dépôt: 10.05.2017
(51) Int. Cl.: B60H 1/00

(54) **DISPOSITIF DE DÉPOLLUTION DE L'AIR D'UN VÉHICULE EN FONCTION DU RISQUE DE POLLUTION ET DU RISQUE PHYSIOLOGIQUE ET/OU DU RISQUE D'EMBUAGE**
FAHRZEUGLUFTVERSCHMUTZUNGSSTEUERUNGSVORRICHTUNG ZUR BESEITIGUNG VON VERSCHMUTZUNG GEMÄSS DES RISIKOS VON VERSCHMUTZUNG UND DES PHYSIOLOGISCHEN RISIKOS UND/ODER DER RISIKOS AUF VERNEBELUNG
VEHICLE AIR POLLUTION-CONTROL DEVICE FOR REMOVING POLLUTION ACCORDING TO THE RISK OF POLLUTION AND TO THE PHYSIOLOGICAL RISK AND/OR TO THE RISK OF MISTING

(30) Priorité: 12.05.2016 FR 1654223
(43) Date de publication de la demande: 20.03.2019
(73) Titulaire: PSA Automobiles S.A., 78300 Poissy (FR)
(72) Inventeur: PAJOT, Karine, 91370 Verrieres Le Buisson (FR); AUBRY, Vincent, 91400 Orsay (FR); DUMUR, Denis, 78990 Elancourt (FR); PINTAT, Bruno, 92140 Clamart (FR)
(86) Numéro de dépôt international: PCT/FR2017/051118
(87) Numéro de publication internationale: WO 2017/194880

(56) Documents cités:
- EP-A1- 1 632 371
- EP-A1- 2 871 866
- DE-A1- 4 127 690
- DE-A1-102011 086 474
- FR-A1- 2 976 853
- KR-B1- 101 614 735
- US-A1- 2013 324 024
- US-A1- 2015 136 376

## Description

L'invention concerne les dispositifs de dépollution qui sont chargés de dépolluer de l'air devant alimenter un habitacle de véhicule.

L'air qui alimente l'habitacle d'un véhicule provenant de l'extérieur et/ou de l'intérieur, il est donc fréquemment pollué par des polluants issus de l'extérieur, tels que des poussières (de tailles importantes), des particules fines (par exemple de type PM10, PM2,5 et PM1), des pollens, et des gaz inodores (par exemple de l'oxyde d'azote (ou NOₓ), ou du monoxyde de carbone (ou CO)), ou odorants (par exemple un gaz carboné de type CₓH_{y}), et par des polluants produits à l'intérieur par les passagers, tels que du gaz carbonique (CO₂), de l'eau (H₂O) et éventuellement des virus ou des bactéries, ou par des composants internes, tels que des composés organiques volatils (ou COVs).

Afin de dépolluer cet air, certains véhicules, généralement de type automobile, comprennent au moins un dispositif de dépollution. Ce dernier peut faire partie de l'installation de traitement d'air du véhicule (généralement dédiée au chauffage et/ou à la climatisation), ou bien peut constituer un équipement additionnel et fonctionnant indépendamment d'une telle installation de traitement d'air. Un tel équipement additionnel peut, par exemple, être installé sous un siège ou dans une console centrale implantée entre deux sièges.

Ce type de dispositif de dépollution est habituellement chargé de déclencher une phase de dépollution de l'air lorsque la concentration d'au moins un polluant contenu dans l'air (extérieur ou intérieur) dépasse un seuil choisi.

Par exemple, en présence d'une pollution à l'extérieur du véhicule, la phase de dépollution peut consister à imposer une alimentation de l'habitacle en air exclusivement recirculé (c'est-à-dire issu de ce dernier) et filtré en circuit fermé. Cependant la durée de cette phase de dépollution est généralement prédéfinie du fait qu'il faut régulièrement faire baisser les concentrations de gaz carbonique et d'eau qui sont produits par les passagers dans l'habitacle en l'absence d'entrée d'air extérieur. Cette durée prédéfinie est généralement égale à treize minutes, mais elle peut parfois être modulée en fonction du nombre de passagers présents dans l'habitacle.

Dans l'état de la technique le brevet FR2976853 décrit un système de conditionnement d'air d'un habitacle de véhicule comprend une unité de gestion électronique, reliée au volet motorisé d'un pulseur d'air, configurée pour faire varier de manière continue la position du volet motorisé en fonction de la température extérieure au véhicule, de la température intérieure au véhicule, et d'un paramètre supplémentaire parmi la vitesse du véhicule, un nombre détecté d'occupants du véhicule, un taux de CO mesuré par un capteur dans l'habitacle, et un taux d'humidité ([H O])mesuré par un capteur d'hygrométrie placé dans l'habitacle, l'unité de gestion électronique étant configurée pour comparer une valeur obtenue à l'aide d'un ou de deux des paramètres supplémentaires à une valeur de seuil cartographiée en fonction des deux valeurs de températures intérieure et extérieure. Le brevet EP1632371 décrit un appareil dont le système est conçu de façon à fournir un véhicule avec une fonction de mesure de la saturation en oxygène dans le sang, une fonction de mesure de la concentration en oxygène ou de la concentration en dioxyde de carbone, et une fonction de mesure de l'altitude et peut climatiser l'air de l'habitacle du véhicule en utilisant une fonction restante même en cas de défaillance des fonctions respectives. Ce qui permet d'éliminer le manque d'oxygène des occupants individuels en fonction de leur état et d'empêcher les occupants de développer le mal de l'altitude. Le brevet US9662960 décrit un système de navigation audio - vidéo comprenant une unité de communication configurée pour recevoir un signal provenant d'un terminal d'utilisateur; une unité d' extraction configurée pour extraire des informations de localisation du terminal d'utilisateur sur la base du signal reçu, et un contrôleur configuré pour commander un environnement de conditionnement d' air dans le véhicule sur la base des informations biométriques incluses dans les informations de signal et l' emplacement du terminal d'utilisateur d'un utilisateur. Et enfin, le brevet DE102011086474 décrit un procédé consistant à fournir un dispositif d'amélioration de l'air sous la forme d'un humidificateur d'air commandé par une unité de commande électronique en fonction de conditions prédéterminées pour le commuter automatiquement et le désactiver. La condition de mise sous tension du dispositif d'amélioration de l'air correspond à la détection de l'état de passager.

Un inconvénient de cette phase de dépollution réside dans le fait qu'il faut ensuite renouveler l'air intérieur avec de l'air extérieur, quelle que soit la qualité de l'air régnant à l'extérieur à l'instant du renouvellement, et donc il arrive fréquemment que l'air de l'habitacle soit partiellement renouvelé avec de l'air extérieur très pollué. Pour atténuer cet inconvénient, il est parfois possible, en présence d'une pollution extérieure combinée à une pollution intérieure, de mettre en fonctionnement des moyens de dépollution en complément de l'alimentation exclusive en air extérieur.Le mode de dépollution décrit ci-avant ne s'avère pas optimal, notamment du fait qu'il ne tient pas compte de paramètres représentatifs des passagers présents dans l'habitacle.

L'invention a donc notamment pour but d'améliorer la situation.

Elle propose notamment à cet effet un dispositif de dépollution d'air, d'une part, destiné à équiper un véhicule comprenant un habitacle et un volet d'alimentation propre à prendre des positions fermée, ouverte et intermédiaire permettant d'alimenter l'habitacle en airs issus respectivement de l'intérieur, de l'extérieur, et de l'intérieur et de l'extérieur de l'habitacle, et, d'autre part, comprenant des moyens de dépollution agencés pour dépolluer une partie au moins de l'air alimentant l'habitacle.

Ce dispositif se caractérise par le fait qu'il comprend également :
- des moyens d'analyse agencés pour estimer un risque de pollution en fonction au moins de données représentatives de la qualité de l'air à l'extérieur du véhicule, un risque physiologique et/ou un risque d'embuage en fonction au moins d'une concentration de gaz carbonique et/ou d'un taux d'humidité dans l'habitacle, d'un nombre de passagers présents dans l'habitacle, et de paramètres physiques et de santé des passagers, et
   des moyens de contrôle agencés pour contrôler la position du volet d'alimentation et le fonctionnement des moyens de dépollution en fonction au moins des risque de pollution, risque physiologique et/ou risque d'embuage estimés, ses moyens de contrôle peuvent être agencés pour déclencher le placement du volet d'alimentation dans sa position ouverte et interdire le fonctionnement des moyens de dépollution lorsque le risque de pollution estimé est inférieur à un premier seuil et le risque physiologique estimé est inférieur à un deuxième seuil et/ou le risque d'embuage estimé est inférieur à un troisième seuil, ou lorsque le risque de pollution estimé est inférieur au premier seuil et le risque physiologique estimé est supérieur au deuxième seuil et/ou le risque d'embuage estimé est supérieur au troisième seuil .

Cela permet d'améliorer le confort des passagers d'un véhicule.

Le dispositif de dépollution d'air selon l'invention peut comporter d'autres caractéristiques qui peuvent être prises séparément ou en combinaison, et notamment :
- ses moyens d'analyse peuvent être agencés pour estimer le niveau de risque de pollution en fonction également de données météorologiques représentatives de la météorologie à l'extérieur du véhicule ;
   ➢ ses moyens de contrôle peuvent être agencés pour contrôler la position du volet d'alimentation et le fonctionnement des moyens de dépollution en fonction également des données météorologiques ;
- ses moyens de contrôle peuvent être agencés pour déclencher le placement du volet d'alimentation dans sa position fermée et interdire le fonctionnement des moyens de dépollution lorsque le risque de pollution estimé est supérieur à un premier seuil et le risque physiologique estimé est inférieur à un deuxième seuil et/ou le risque d'embuage estimé est inférieur à un troisième seuil ;
- ses moyens de contrôle peuvent être agencés pour déclencher le placement du volet d'alimentation dans une position intermédiaire et le fonctionnement des moyens de dépollution lorsque le risque de pollution estimé est supérieur à un premier seuil et le risque physiologique estimé est supérieur à un deuxième seuil et/ou le risque d'embuage estimé est supérieur à un troisième seuil ;
- il peut comprendre des moyens de calcul agencés pour estimer la concentration de gaz carbonique et/ou le taux d'humidité dans l'habitacle en fonction au moins du nombre de passagers présents dans l'habitacle et des paramètres physiques et de santé des passagers ;
   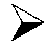 les moyens de calcul peuvent être agencés pour estimer la concentration de gaz carbonique et/ou le taux d'humidité dans l'habitacle en fonction également d'un nombre d'ouvertures d'ouvrants du véhicule depuis une précédente estimation, de niveaux d'ouverture de chacun des ouvrants depuis la précédente estimation, et d'une vitesse moyenne du véhicule depuis la précédente estimation.

L'invention propose également un véhicule, éventuellement de type automobile, et comprenant un habitacle, un volet d'alimentation propre à prendre des positions fermée, ouverte et intermédiaire permettant d'alimenter l'habitacle en airs issus respectivement de l'intérieur, de l'extérieur, et de l'intérieur et de l'extérieur de l'habitacle, et un dispositif de dépollution d'air du type de celui présenté ci-avant.

Par exemple, ce véhicule peut également comprendre une installation de traitement d'air comprenant le dispositif de dépollution d'air.

D'autres caractéristiques et avantages de l'invention apparaîtront à l'examen de la description détaillée ci-après, et du dessin annexé, sur lequel l'unique figure illustre schématiquement et fonctionnellement un véhicule couplé à un réseau de communication et comprenant un exemple d'installation de traitement d'air comportant un exemple de réalisation d'un dispositif de dépollution d'air selon l'invention.

L'invention a notamment pour but de proposer un dispositif de dépollution d'air DD destiné à équiper un véhicule V comprenant au moins un habitacle H.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule, terrestre, maritime (ou fluvial), ou aérien, dès lors qu'il comprend au moins un habitacle pouvant être alimenté en air extérieur et en air recirculé (ou recyclé).

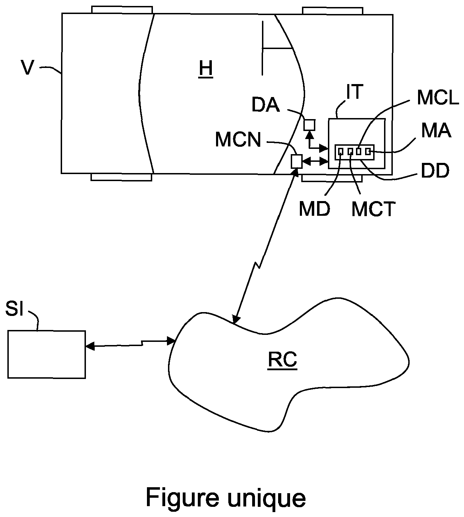

On a schématiquement et fonctionnellement représenté sur la figure 1 un exemple de véhicule V comprenant, notamment, un habitacle H, un dispositif de dépollution d'air DD selon l'invention, et un volet d'alimentation (non représenté).

Le volet d'alimentation est propre à prendre une position fermée permettant d'alimenter l'habitacle H en air issu de l'intérieur (ou air recirculé), une position ouverte permettant d'alimenter l'habitacle H en air issu de l'extérieur du véhicule V, et au moins une position intermédiaire permettant d'alimenter l'habitacle H en un mélange d'airs issus respectivement de l'intérieur et de l'extérieur. On entend ici par « air intérieur » de l'air issu de l'habitacle H et par « air extérieur » de l'air issu de l'extérieur du véhicule V.

Comme illustré, un dispositif de dépollution d'air DD, selon l'invention, comprend au moins des moyens de dépollution MD, des moyens d'analyse MA et des moyens de contrôle MCT.

Dans l'exemple illustré non limitativement sur la figure 1, le dispositif de dépollution d'air DD fait partie d'une installation de traitement d'air IT du véhicule V, chargée d'alimenter l'habitacle H en air traité. Mais le dispositif de dépollution d'air DD pourrait être un équipement additionnel dédié à la dépollution au sein de son véhicule V et fonctionnant indépendamment de l'installation de traitement d'air IT. Un tel équipement additionnel peut, par exemple, être installé sous un siège ou dans une console centrale implantée entre deux sièges.

Ici, l'installation de traitement d'air IT est une installation de chauffage/climatisation implantée dans le compartiment moteur du véhicule V et destinée à alimenter l'habitacle H en air traité. Mais l'installation de traitement d'air IT pourrait être une installation de chauffage ou une installation de climatisation. Une telle installation (de chauffage/climatisation) IT comprend, ici, un dispositif de dépollution d'air DD, un pulseur, une boucle froide (ou boucle de climatisation), une boucle chaude (ou boucle de chauffage), et le volet d'alimentation précité. On notera que dans une variante de réalisation ce dernier pourrait faire partie du dispositif de dépollution d'air DD.

Le pulseur est alimenté en air issu de l'extérieur de l'habitacle H et/ou en air issu de l'intérieur de l'habitacle H (ou air recirculé (ou recyclé)) par le volet d'alimentation (ou d'entrée d'air).

La boucle froide est alimentée en air par le pulseur via un conduit.

La boucle chaude comprend des moyens de chauffage destinés à chauffer l'air qui est destiné à l'habitacle H du véhicule V, éventuellement après un mélange avec de l'air moins chaud.

Le mode de fonctionnement de l'installation IT est choisi par un usager du véhicule V ou par un calculateur supervisant le fonctionnement de l'installation IT, éventuellement en fonction de choix effectué(s) par un usager du véhicule V. Par conséquent, la position du volet d'alimentation, et donc les proportions d'air extérieur et d'air recirculé qui alimentent l'installation IT (et notamment son pulseur), est/sont ici contrôlée(s) par le calculateur précité.

Les moyens de dépollution MD sont agencés pour dépolluer une partie au moins de l'air alimentant l'habitacle H. Ils comprennent notamment des moyens de filtration de polluants destinés à filtrer au moins une espèce chimique sous forme solide (comme par exemple des particules fines ou des poussières ou encore des pollens) ou sous forme gazeuse (comme par exemple CO, O₃, SO₂, CₓH_{y} ou NO₂). Ces moyens de filtration peuvent être installés en différents endroits du véhicule V. Ainsi, ils peuvent être installés au moins en partie dans le conduit qui alimente en air la boucle froide et/ou dans un circuit dédié à la dépollution et alimentant l'installation IT au moyen d'un pulseur additionnel. Dans ce cas le circuit de dépollution et le pulseur additionnel font partie des moyens de dépollution MD, tout comme au moins un volet contrôlant l'accès au circuit de dépollution.

On notera que lorsque le dispositif de dépollution d'air DD est un équipement additionnel fonctionnant indépendamment de l'installation IT, il comprend un boîtier logeant ses moyens de dépollution MD, et notamment au moins un filtre de dépollution et un pulseur additionnel alimenté en air extérieur et/ou en air intérieur par un volet d'alimentation.

Les moyens d'analyse MA sont agencés pour estimer un risque de pollution en fonction au moins de données qui sont représentatives de la qualité de l'air à l'extérieur du véhicule V, et un risque physiologique et/ou un risque d'embuage en fonction au moins d'une concentration de gaz carbonique et/ou d'un taux d'humidité (ou hygrométrie) dans l'habitacle H, d'un nombre de passagers présents dans l'habitacle H, et de paramètres physiques et de santé des passagers.

En d'autres termes, selon l'agencement choisi, les moyens d'analyse MA estiment soit un risque de pollution et un risque physiologique, soit un risque de pollution et un risque d'embuage, soit encore un risque de pollution, un risque physiologique et un risque d'embuage.

Il est rappelé que lorsque le taux de CO₂ est supérieur à 7% cela peut notamment induire une céphalée, une fatigue ou un vertige, et que lorsque ce taux de CO₂ est supérieur à 15% cela peut notamment induire une perte de connaissance. Par ailleurs, une saturation de l'air en humidité a pour conséquence de réduire la vision du conducteur par la formation de buée sur le pare-brise, les fenêtres latérales et la lunette arrière.

Une quantité trop importante de pollution issue de l'extérieur peut, par exemple, induire à plus ou moins long terme des problèmes respiratoires dans le cas d'une exposition trop élevée en NO₂, et des problèmes respiratoire et cardiovasculaire dans le cas d'une exposition trop élevée avec des particules fines (PM). Par ailleurs, il est actuellement considéré que certains COVs sont potentiellement dangereux, et en particulier le benzène (au-delà de 30 µg.m⁻³), l'acétaldéhyde (au-delà de 50 µg.m⁻³), et le formaldéhyde (au-delà de 210 µg.m⁻³).

Les données représentatives de la qualité de l'air à l'extérieur du véhicule V peuvent définir n'importe quel polluant à l'extérieur (et notamment des gaz, des particules ou des pollens). Elles peuvent avoir plusieurs origines. Ainsi, elles peuvent être transmises par voie d'ondes par un serveur d'informations SI, via un réseau de communication non filaire RC, à des moyens de communication MCN qui sont embarqués dans le véhicule V (de façon automatique ou sur requête à la demande du dispositif de dépollution d'air DD). Les données fournies par un tel serveur d'informations SI peuvent être issues de stations de mesure de la qualité de l'air (installées à proximité de voies de circulation qui sont empruntées par les véhicules) ou d'un modèle de prévision de la qualité de l'air (on parle alors de données prévisionnelles).

Dans l'exemple illustré non limitativement sur l'unique figure, le véhicule V comprend de façon permanente des moyens de communication MCN propres à échanger des données par voie d'ondes via un réseau de communication RC. Mais ces moyens de communication MCN pourraient faire partie d'un téléphone intelligent (ou smartphone) ou d'une tablette électronique, temporairement embarqué(e) dans le véhicule V.

En variante, les données de qualité de l'air extérieur peuvent être transmises par voie d'ondes par des satellites, d'une constellation de positionnement par satellites (par exemple GPS), à un dispositif d'aide à la navigation DA embarqué dans le véhicule V. Elles sont alors transmises en complément des données de positionnement. Dans l'exemple illustré non limitativement sur l'unique figure, le véhicule V comprend de façon permanente un dispositif d'aide à la navigation DA. Mais ce dernier (DA) pourrait faire partie d'un téléphone intelligent (ou smartphone) ou d'une tablette électronique, temporairement embarqué(e) dans le véhicule V.

Dans une autre variante, les données de qualité de l'air extérieur peuvent être fournies au dispositif de dépollution DD par au moins un capteur d'analyse installé dans le véhicule V.

Les paramètres physiques et de santé des passagers peuvent être fournis par des moyens d'acquisition installés dans le véhicule V et/ou des téléphones intelligents (ou smartphones) ou des tablettes électroniques ou des montres connectées, temporairement embarqué(e)s dans le véhicule V et appartenant aux passagers.

Parmi les paramètres de santé, on peut notamment citer des allergies, une insuffisance respiratoire, de l'asthme et des problèmes cardiaques, ainsi qu'éventuellement la température corporelle et l'essoufflement.

Parmi les paramètres physiques, on peut notamment citer la corpulence, le sexe et le fait qu'un passager est un enfant ou un adulte ou un animal.

La connaissance de certains paramètres physiques et de santé des passagers permet de faciliter l'estimation de la concentration de gaz carbonique (CO₂) et/ou du taux d'humidité produits dans l'habitacle H. Ainsi, la corpulence, l'essoufflement et le fait d'être un adulte ou un enfant influent au moins sur la production de gaz carbonique. Par ailleurs, la corpulence et la température corporelle influent au moins sur la production d'humidité.

Les moyens d'acquisition peuvent comprendre au moins une caméra et/ou des nappes de détection installées dans les ceintures de sécurité ou dans les sièges et/ou des bracelets de santé portés par les passagers. On notera qu'ils peuvent déterminer la corpulence de chaque passager, ainsi qu'éventuellement la température corporelle de chaque passager et/ou l'essoufflement de chaque passager et/ou le rythme cardiaque de chaque passager et/ou le sexe de chaque passager et/ou le fait qu'un passager est un enfant, un adulte ou un animal, par exemple.

Le nombre de passagers présents dans l'habitacle H est une information qui est généralement disponible dans le véhicule V, par exemple dans ce que l'homme de l'art appelle parfois un « boîtier de servitude intelligent » (ou BSI). Elle peut résulter d'une analyse de l'occupation des sièges du véhicule V (par caméra et/ou capteurs de présence) et/ou de l'utilisation des ceintures de sécurité associées aux sièges du véhicule V.

La connaissance du nombre de passagers présents dans l'habitacle H est une information importante utilisée pour estimer la concentration de gaz carbonique (CO₂) et le taux d'humidité produits dans l'habitacle H.

La concentration de gaz carbonique dans l'habitacle H peut être soit fournie au dispositif de dépollution DD par un capteur installé dans le véhicule V, soit estimée par des moyens de calcul MCL faisant partie du dispositif de dépollution DD. Dans cette seconde alternative, illustrée sur l'unique figure, les moyens de calcul MCL sont agencés pour estimer la concentration de gaz carbonique dans l'habitacle H en fonction au moins du nombre de passagers présents dans l'habitacle H et des paramètres physiques et de santé des passagers. On notera qu'il est avantageux pour améliorer la précision de l'estimation que les moyens de calcul MCL soient agencés pour estimer la concentration de gaz carbonique dans l'habitacle H en fonction également d'un nombre d'ouvertures d'ouvrants (vitres, portes, hayon) du véhicule V depuis la précédente (et donc dernière) estimation, des niveaux d'ouverture de chacun des ouvrants depuis cette précédente estimation, et de la vitesse moyenne du véhicule V depuis cette précédente estimation.

Plus la concentration de gaz carbonique est élevée, plus le risque physiologique est important. Ce dernier peut être (notablement) accru lorsque l'un au moins des passagers présente un problème respiratoire ou est asthmatique, notamment.

Le taux d'humidité (ou l'hygrométrie) dans l'habitacle H peut être soit fourni au dispositif de dépollution DD par un capteur installé dans le véhicule V, soit estimé par les moyens de calcul MCL du dispositif de dépollution DD. Dans cette seconde alternative, illustrée sur l'unique figure, les moyens de calcul MCL sont agencés pour estimer le taux d'humidité dans l'habitacle H en fonction au moins du nombre de passagers présents dans l'habitacle H et des paramètres physiques et de santé des passagers. On notera qu'il est avantageux pour améliorer la précision de l'estimation que les moyens de calcul MCL soient agencés pour estimer le taux d'humidité dans l'habitacle H en fonction également du nombre d'ouvertures d'ouvrants du véhicule V depuis la précédente estimation, des niveaux d'ouverture de chacun des ouvrants depuis cette précédente estimation, et de la vitesse moyenne du véhicule V depuis cette précédente estimation.

Plus le taux d'humidité est élevé, plus le risque d'embuage est important et plus cela constitue une gêne pour les passagers, et en particulier pour le conducteur.

On notera également que les moyens d'analyse MA peuvent être agencés pour estimer le niveau de risque de pollution en fonction également de données météorologiques qui sont représentatives de la météorologie à l'extérieur du véhicule V. Parmi ces données météorologiques on peut notamment citer la présence de pluie, de neige, de vent, ou d'une situation anticyclonique (pression atmosphérique élevée, ciel dégagé, vent faible). Il est rappelé qu'une situation anticyclonique est propice à une inversion de température se traduisant par une accumulation progressive des polluants sous la couche d'inversion, et qu'un vent fort, une pluie ou de la neige est propice à la réduction rapide d'une pollution. On notera que la présence de pluie peut être également détectée par un capteur de pluie équipant le véhicule V.

On comprendra donc que certaines données météorologiques sont de nature à augmenter le risque de pollution, tandis que d'autres sont de nature à diminuer (voire rendre nul) le risque de pollution.

Les moyens de contrôle MCT sont agencés pour contrôler la position du volet d'alimentation et le fonctionnement des moyens de dépollution MD en fonction au moins des risque de pollution et risque physiologique et/ou risque d'embuage estimés par les moyens d'analyse MA.

On notera que lorsque les moyens de dépollution MD ne comprennent pas de pulseur additionnel, ils doivent être alimentés en air (à dépolluer) par un pulseur de l'installation de traitement d'air IT. Par conséquent, dans ce cas les moyens de contrôle MCT sont agencés pour contrôler le fonctionnement de ce pulseur.

Par exemple, les moyens de contrôle MCT peuvent être agencés pour déclencher le placement du volet d'alimentation dans sa position fermée et interdire le fonctionnement des moyens de dépollution MD lorsque le risque de pollution estimé est supérieur à un premier seuil s1 et le risque physiologique estimé est inférieur à un deuxième seuil s2 et/ou le risque d'embuage estimé est inférieur à un troisième seuil s3.

On notera que les valeurs respectives des trois seuils s1, s2 et s3 peuvent être identiques ou bien différentes les unes des autres, au moins partiellement.

Egalement par exemple, les moyens de contrôle MCT peuvent être agencés pour déclencher le placement du volet d'alimentation dans sa position ouverte et interdire le fonctionnement des moyens de dépollution MD lorsque le risque de pollution estimé est inférieur au premier seuil s1 et le risque physiologique estimé est inférieur au deuxième seuil s2 et/ou le risque d'embuage estimé est inférieur au troisième seuil s3, ou bien lorsque le risque de pollution estimé est inférieur au premier seuil s1 et le risque physiologique estimé est supérieur au deuxième seuil s2 et/ou le risque d'embuage estimé est supérieur au troisième seuil s3.

Egalement par exemple, les moyens de contrôle MCT peuvent être agencés pour déclencher le placement du volet d'alimentation dans une position intermédiaire et le fonctionnement des moyens de dépollution MD lorsque le risque de pollution estimé est supérieur au premier seuil s1 et le risque physiologique estimé est supérieur au deuxième seuil s2 et/ou le risque d'embuage estimé est supérieur au troisième seuil s3.

On notera que les moyens de contrôle MCT peuvent être également et éventuellement agencés pour contrôler la position du volet d'alimentation et le fonctionnement des moyens de dépollution MD en fonction également des données météorologiques. Par exemple, on peut envisager que lorsqu'il pleut les moyens de contrôle MCT déclenchent systématiquement le placement du volet d'alimentation dans sa position ouverte et interdisent le fonctionnement des moyens de dépollution MD. On considère en effet ici qu'en présence de pluie il n'y a pas de pollution extérieure, et donc que l'alimentation de l'habitacle H avec de l'air extérieur sans avoir besoin de faire fonctionner les moyens de dépollution MD est suffisante pour éviter l'augmentation de la concentration de gaz carbonique et du taux d'humidité.

La durée de fermeture du volet d'alimentation est calculée au plus juste par les moyens de contrôle MCT en fonction du risque physiologique et/ou du risque d'embuage estimés. Elle dépend en effet, notamment, du nombre, de la nature, de la corpulence et des problèmes de santé des passagers. Elle pourra donc être notablement plus courte ou un peu plus longue que la durée maximale habituellement imposée (généralement égale à treize minutes).

On notera également que les moyens d'analyse MA peuvent éventuellement estimer les risque de pollution et risque physiologique et/ou risque d'embuage de façon anticipée pour différents points d'un itinéraire calculé par l'éventuel dispositif d'aide à la navigation DA. Cela nécessite qu'ils disposent à l'avance des données de qualité de l'air extérieur sur cet itinéraire, ainsi qu'éventuellement de données météorologiques sur cet itinéraire. Dans ce cas, ils peuvent éventuellement adapter leurs estimations de risques pendant le trajet du véhicule V sur cet itinéraire en fonction de l'évolution ou de l'obtention localement de certains paramètres et/ou de certaines données.

On notera également que les moyens de contrôle MCT, les moyens d'analyse MA et les éventuels moyens de calcul MCL du dispositif de dépollution d'air DD peuvent être, ici, implantés dans le calculateur qui supervise le fonctionnement de l'installation IT. Cela résulte du fait que le dispositif de dépollution d'air DD fait ici partie de l'installation IT. Mais cela n'est pas obligatoire. En effet, ils pourraient être implantés dans un autre équipement électronique. Par conséquent, les moyens de contrôle MCT, les moyens d'analyse MA et les éventuels moyens de calcul MCL peuvent être réalisés sous la forme de modules logiciels (ou informatiques ou encore « software »), ou bien d'une combinaison de circuits électroniques (ou « hardware ») et de modules logiciels.

Grâce à l'invention le confort des passagers d'un véhicule peut être amélioré.

## Revendications

1. Dispositif de dépollution d'air (DD) pour un véhicule (V) comprenant un habitacle (H) et un volet d'alimentation propre à prendre des positions fermée, ouverte et intermédiaire permettant d'alimenter ledit habitacle (H) en airs issus respectivement de l'intérieur, de l'extérieur, et de l'intérieur et de l'extérieur dudit habitacle (H), ledit dispositif (DD) comprenant des moyens de dépollution (MD) agencés pour dépolluer une partie au moins de l'air alimentant ledit habitacle (H), et comprenant en outre des moyens d'analyse (MA) agencés pour estimer un risque de pollution en fonction au moins de données représentatives de la qualité de l'air à l'extérieur dudit véhicule (V), et un risque physiologique et/ou un risque d'embuage en fonction au moins d'une concentration de gaz carbonique et/ou d'un taux d'humidité dans ledit habitacle (H), d'un nombre de passagers présents dans ledit habitacle (H), et de paramètres physiques et de santé desdits passagers, et des moyens de contrôle (MCT) agencés pour contrôler la position dudit volet d'alimentation et le fonctionnement desdits moyens de dépollution (MD) en fonction au moins desdits risque de pollution et risque physiologique et/ou risque d'embuage estimés, **caractérisé en ce que** lesdits moyens de contrôle (MCT) sont agencés pour déclencher le placement dudit volet d'alimentation dans sa position ouverte et interdire le fonctionnement desdits moyens de dépollution (MD) lorsque ledit risque de pollution estimé est inférieur à un premier seuil et ledit risque physiologique estimé est inférieur à un deuxième seuil et/ou le risque d'embuage estimé est inférieur à un troisième seuil, ou lorsque ledit risque de pollution estimé est inférieur audit premier seuil et ledit risque physiologique estimé est supérieur audit deuxième seuil et/ou ledit risque d'embuage estimé est supérieur audit troisième seuil.

2. Dispositif selon la revendication 1, **caractérisé en ce que** lesdits moyens d'analyse (MA) sont agencés pour estimer ledit niveau de risque de pollution en fonction également de données météorologiques représentatives de la météorologie à l'extérieur dudit véhicule (V).

3. Dispositif selon la revendication 2, **caractérisé en ce que** lesdits moyens de contrôle (MCT) sont agencés pour contrôler la position dudit volet d'alimentation et le fonctionnement desdits moyens de dépollution (MD) en fonction également desdites données météorologiques.

4. Dispositif selon l'une des revendications 1 à 3, **caractérisé en ce que** lesdits moyens de contrôle (MCT) sont agencés pour déclencher le placement dudit volet d'alimentation dans sa position fermée et interdire le fonctionnement desdits moyens de dépollution (MD) lorsque ledit risque de pollution estimé est supérieur à un premier seuil et ledit risque physiologique estimé est inférieur à un deuxième seuil et/ou ledit risque d'embuage estimé est inférieur à un troisième seuil.

5. Dispositif selon l'une des revendications 1 à 4, **caractérisé en ce que** lesdits moyens de contrôle (MCT) sont agencés pour déclencher le placement dudit volet d'alimentation dans une position intermédiaire et le fonctionnement desdits moyens de dépollution (MD) lorsque ledit risque de pollution estimé est supérieur à un premier seuil et ledit risque physiologique estimé est supérieur à un deuxième seuil et/ou ledit risque d'embuage estimé est supérieur à un troisième seuil.

6. Dispositif selon l'une des revendications 1 à 5, **caractérisé en ce qu'**il comprend des moyens de calcul (MCL) agencés pour estimer ladite concentration de gaz carbonique et/ou ledit taux d'humidité dans ledit habitacle (H) en fonction au moins dudit nombre de passagers présents dans ledit habitacle (H) et desdits paramètres physiques et de santé des passagers.

7. Dispositif selon la revendication 6, **caractérisé en ce que** lesdits moyens de calcul (MCL) sont agencés pour estimer ladite concentration de gaz carbonique et/ou ledit taux d'humidité dans ledit habitacle (H) en fonction également d'un nombre d'ouvertures d'ouvrants dudit véhicule (V) depuis une précédente estimation, de niveaux d'ouverture de chacun desdits ouvrants depuis ladite précédente estimation, et d'une vitesse moyenne dudit véhicule (V) depuis ladite précédente estimation.

8. Véhicule (V) comprenant un habitacle (H) et un volet d'alimentation propre à prendre des positions fermée, ouverte et intermédiaire permettant d'alimenter ledit habitacle (H) en airs issus respectivement de l'intérieur, de l'extérieur, et de l'intérieur et de l'extérieur dudit habitacle (H), **caractérisé en ce qu'**il comprend en outre un dispositif de dépollution d'air (DD) selon l'une des revendications précédentes.

9. Véhicule selon la revendication 8, **caractérisé en ce qu'**il comprend une installation de traitement d'air (IT) comprenant ledit dispositif de dépollution d'air (DD).

## Patentansprüche

1. Luftreinigungsvorrichtung (DD) für ein Fahrzeug (V), das eine Fahrgastzelle (H) und eine Versorgungsklappe umfasst, die geeignet ist, eine geschlossene, offene und Zwischenposition einzunehmen, die es erlauben, die Fahrgastzelle (H) mit Luft zu versorgen, die jeweils von dem Inneren, dem Äußeren und dem Inneren und dem Äußeren der Fahrgastzelle (H) stammt, wobei die Vorrichtung (DD) Reinigungsmittel (MD) umfasst, die eingerichtet sind, um mindestens einen Teil der Luft, die die Fahrgastzelle (H) versorgt, zu reinigen und außerdem Analysemittel (MA) umfasst, die eingerichtet sind, um ein Verschmutzungsrisiko in Abhängigkeit von mindestens Daten zu schätzen, die für die Luftqualität außerhalb des Fahrzeugs (V) repräsentativ sind, und ein physiologisches Risiko und/oder ein Vernebelungsrisiko in Abhängigkeit von mindestens einer Kohlendioxidkonzentration und/oder einem Feuchtigkeitsprozentsatz in der Fahrgastzelle (H), einer Anzahl von Insassen, die in der Fahrgastzelle (H) anwesend ist, und physischer und Gesundheitsparameter der Insassen, und Steuermittel (MCT), die eingerichtet sind, um die Position der Versorgungsklappe und den Betrieb der Reinigungsmittel (MD) in Abhängigkeit von mindestens dem Verschmutzungsrisiko und dem physiologischen Risiko und/oder dem geschätzten Vernebelungsrisiko zu steuern, **dadurch gekennzeichnet, dass** die Steuermittel (MCT) eingerichtet sind, um das Platzieren der Versorgungsklappe in ihre offene Position auszulösen und den Betrieb der Reinigungsmittel (MD) zu verbieten, wenn das geschätzte Verschmutzungsrisiko kleiner ist als ein erster Schwellenwert, und das geschätzte physiologische Risiko kleiner ist als ein zweiter Schwellenwert und/oder das geschätzte Vernebelungsrisiko kleiner ist als ein dritter Schwellenwert, oder wenn das geschätzte Verschmutzungsrisiko kleiner ist als der erste Schwellenwert, und das geschätzte physiologische Risiko größer ist als der zweite Schwellenwert und/oder das geschätzte Vernebelungsrisiko größer ist als der dritte Schwellenwert.

2. Vorrichtung nach Anspruch 1, **dadurch gekennzeichnet, dass** die Analysemittel (MA) eingerichtet sind, um das Verschmutzungsrisikoniveau auch in Abhängigkeit von meteorologischen Daten zu schätzen, die für die Meteorologie außerhalb des Fahrzeugs (V) repräsentativ sind.

3. Vorrichtung nach Anspruch 2, **dadurch gekennzeichnet, dass** die Steuermittel (MCT) eingerichtet sind, um die Position der Versorgungsklappe und den Betrieb der Reinigungsmittel (MD) auch in Abhängigkeit von den meteorologischen Daten zu steuern.

4. Vorrichtung nach einem der Ansprüche 1 bis 3, **dadurch gekennzeichnet, dass** die Steuermittel (MCT) eingerichtet sind, um das Platzieren der Versorgungsklappe in ihre geschlossene Position auszulösen und den Betrieb der Reinigungsmittel (MD) zu verbieten, wenn die geschätzte Verschmutzungsgefahr größer ist als ein erster Schwellenwert, und das geschätzte physiologische Risiko kleiner ist als ein zweiter Schwellenwert, und/oder das geschätzte Vernebelungsrisiko kleiner ist als ein dritter Schwellenwert.

5. Vorrichtung nach einem der Ansprüche 1 bis 4, **dadurch gekennzeichnet, dass** die Steuermittel (MCT) eingerichtet sind, um das Platzieren der Versorgungsklappe in eine Zwischenposition und den Betrieb der Reinigungsmittel (MD) auszulösen, wenn das geschätzte Verschmutzungsrisiko größer ist als ein erster Schwellenwert, und das geschätzte physiologische Risiko größer ist als ein zweiter Schwellenwert, und/oder das geschätzte Vernebelungsrisiko größer ist als ein dritter Schwellenwert.

6. Vorrichtung nach einem der Ansprüche 1 bis 5, **dadurch gekennzeichnet, dass** sie Rechenmittel (MCL) umfasst, die eingerichtet sind, um die Kohlendioxidkonzentration und/oder den Feuchtigkeitsprozentsatz in der Fahrgastzelle (H) in Abhängigkeit von mindestens der Anzahl von Insassen, die in der Fahrgastzelle (H) anwesend ist, und den physischen und Gesundheitsparametern der Insassen zu schätzen.

7. Vorrichtung nach Anspruch 6, **dadurch gekennzeichnet, dass** die Rechenmittel (MCL) eingerichtet sind, um die Kohlendioxidkonzentration und/oder den Feuchtigkeitsprozentsatz in der Fahrgastzelle (H) auch in Abhängigkeit von einer Anzahl von Fensteröffnungen des Fahrzeugs (V) seit einer vorhergehenden Schätzung, von Öffnungsniveaus jedes der Fenster seit der vorhergehenden Schätzung und einer mittleren Geschwindigkeit des Fahrzeugs (V) seit der vorhergehenden Schätzung zu schätzen.

8. Fahrzeug (V), das eine Fahrgastzelle (H) und eine Versorgungsklappe umfasst, die geeignet ist, eine geschlossene, offene und Zwischenposition einzunehmen, die es erlauben, die Fahrgastzelle (H) mit Luft, die jeweils aus dem Inneren, dem Äußeren und dem Inneren und dem Äußeren der Fahrgastzelle (H) stammt, zu versorgen, **dadurch gekennzeichnet, dass** es außerdem eine Luftreinigungsvorrichtung (DD) nach einem der vorstehenden Ansprüche umfasst.

9. Fahrzeug nach Anspruch 8, **dadurch gekennzeichnet, dass** es eine Luftaufbereitungsanlage (IT) umfasst, die die Luftreinigungsvorrichtung (DD) umfasst.

## Claims

1. An air pollution-control device (DD) for a vehicle (V) including a passenger compartment (H) and a supply flap able to adopt closed, open and intermediate positions allowing said passenger compartment (H) to be supplied with air originating respectively from the interior, from the exterior, and from the interior and the exterior of said passenger compartment (H), said device (DD) including pollution-control means (MD) arranged for removing pollution from at least a portion of the air supplying said passenger compartment (H), and further including analysis means (MA) arranged to estimate a risk of pollution as a function at least of data representative of the quality of the air at the exterior of said vehicle (V), and a physiological risk and/or a risk of misting as a function at least of a concentration of carbon dioxide and/or of a moisture content in said passenger compartment (H), of a number of passengers present in said passenger compartment (H), and of physical and health parameters of said passengers, and of control means (MCT) arranged to control the position of said supply flap and the operation of said pollution-control means (MD) as a function at least of said estimated risk of pollution and estimated physiological risk and/or estimated risk of misting, **characterized in that** said control means (MCT) are arranged to trigger the placement of said supply flap in its open position and to prohibit the operation of said pollution-control means (MD) when said estimated risk of pollution is less than a first threshold and said estimated physiological risk is less than a second threshold and/or the estimated risk of misting is less than a third threshold, or when said estimated risk of pollution is less than said first threshold and said estimated physiological risk is greater than said second threshold and/or said estimated risk of misting is greater than said third threshold.

2. The device according to Claim 1, **characterized in that** said analysis means (MA) are arranged to estimate said level of risk of pollution as a function also of meteorological data representative of the meteorology at the exterior of said vehicle (V).

3. The device according to Claim 2, **characterized in that** said control means (MCT) are arranged to control the position of said supply flap and the operation of said pollution-control means (MD) as a function also of said meteorological data.

4. The device according to one of Claims 1 to 3, **characterized in that** said control means (MCT) are arranged to trigger the placement of said supply flap in its closed position and to prohibit the operation of said pollution-control means (MD) when said estimated risk of pollution is greater than a first threshold and said estimated physiological risk is less than a second threshold and/or said estimated risk of misting is less than a third threshold.

5. The device according to one of Claims 1 to 4, **characterized in that** said control means (MCT) are arranged to trigger the placement of said supply flap in an intermediate position and the operation of said pollution-control means (MD) when said estimated risk of pollution is greater than a first threshold and said estimated physiological risk is greater than a second threshold and/or said estimated risk of misting is greater than a third threshold.

6. The device according to one of Claims 1 to 5, **characterized in that** it includes calculation means (MCL) arranged to estimate said concentration of carbon dioxide and/or said moisture content in said passenger compartment (H) as a function at least of said number of passengers present in said passenger compartment (H) and said physical and health parameters of the passengers.

7. The device according to Claim 6, **characterized in that** said calculation means (MCL) are arranged to estimate said concentration of carbon dioxide and/or said moisture content in said passenger compartment (H) as a function also of a number of openings of opening panels of said vehicle (V) since a preceding estimation, of levels of opening of each of said opening panels since said preceding estimation, and of an average speed of said vehicle (V) since said preceding estimation.

8. A vehicle (V) including a passenger compartment (H) and a supply flap able to adopt closed, open and intermediate positions permitting said passenger compartment (H) to be supplied with air originating respectively from the interior, from the exterior, and from the interior and from the exterior of said passenger compartment (H), **characterized in that** it further includes an air pollution-control device (DD) according to one of the preceding claims.

9. The vehicle according to Claim 8, **characterized in that** it includes an air treatment installation (IT) including said air pollution-control device (DD).
